# EUROPÄISCHE PATENTSCHRIFT

(11) **EP 3 182 186 B1**
(45) Veröffentlichungstag und Bekanntmachung des Hinweises auf die Patenterteilung: **29.10.2025**
(21) Anmeldenummer: 16020476.4
(22) Anmeldetag: 01.12.2016
(51) Int. Cl.: G02B 6/44

(54) **KABELZUGABFANGELEMENT FÜR GLASFASERKABEL**
CABLE TRAIN INTERCEPTION ELEMENT FOR OPTICAL FIBRE CABLE
ÉLÉMENT DE CAPTURE DE TRACTION DE CÂBLE POUR CÂBLE EN FIBRE DE VERRE

(30) Priorität: 16.12.2015 DE 202015106838 U
(43) Veröffentlichungstag der Anmeldung: 21.06.2017
(73) Patentinhaber: Hauff-Technik GRIDCOM GmbH, 73494 Rosenberg (DE)
(72) Erfinder: Hammer, Ralf, 73489 Jagstzell (DE)
(74) Vertreter: Szynka Smorodin Patentanwälte Partnerschaft mbB

(56) Entgegenhaltungen:
- WO-A1-2005/033758
- WO-A1-2015/175363
- WO-A2-2012/074685
- CN-U- 204 462 469
- US-A- 5 503 369
- US-A1- 2003 059 168
- US-A1- 2007 098 331
- US-A1- 2008 080 831
- US-A1- 2012 002 935
- US-A1- 2012 106 914

## Beschreibung

Die Erfindung betrifft ein Kabelzugabfangelement für Glasfaserkabel nach dem Oberbegriff von Anspruch 1.

Grundsätzlich ist die Erfindung zum Zugabfang eines oder mehrerer Kabel in nahezu beliebiger Ausführung und damit insbesondere für Glasfaserkabel geeignet.

Als Glasfaserkabel werden vorliegend Lichtwellenleiter (auch: Lichtleitkabel) verstanden. Die Erfindung kann für mehradrige oder einadrige Glasfaserkabel verwendet werden.

Glasfaserkabel werden in der Nachrichtentechnik als Übertragungsmedium in Bereichen eingesetzt, bei denen hohen Reichweiten und Übertragungsraten erforderlich sind. Insbesondere wenn Glasfasernetze bis zum Verbraucher verlegt werden sollen ("fibre to the home"), werden optische Telekommunikationssteckdosen (OTO, "optical telecommunications outlet") zur Aufnahme und Führung des Glasfaserkabels auf eine Kupplung nötig. Von einer solchen - meist standardisierten - Kupplung können die Glasfasernetzwerke komfortabel über Glasfaseranschlusskabel mit korrespondierenden Steckern mit einer Endeinrichtung, zum Beispiel einem Router, verbunden werden.

Zum Schutz vor mechanischer Beschädigungen der Verbindungsstelle sind Maßnahmen zum Kabelzugabfang, insbesondere an der Eintrittsstelle des Glasfaserkabels in die Telekommunikationssteckdose, erforderlich.

In der DE 10 2008 027 381 A1 ist eine Glasfaseranschlussdose gezeigt, wie diese in der Praxis häufig eingesetzt wird. Die Glasfaseranschlussdose umfasst dabei ein mindestens zweiteiliges Gehäuse mit einem Unterteil und einem Deckelteil, wobei das Deckelteil schwenkbar an dem Unterteil angeordnet ist. Die Glasfaseranschlussdose weist außerdem mindestens eine Aufnahme für einen Spleiß auf.

Ein Spleiß ist die Verbindung zweier Glasfasern, die beispielsweise für die Verbindung des Glasfaserkabels mit einer Kupplung erforderlich ist. Eine derartige Verbindungsstelle zwischen zwei Glasfasern ist als äußerst empfindlich gegenüber Umwelteinflüssen anzusehen und dementsprechend sorgfältig bzw. schützend zu lagern und zu fixieren. Die in der DE 10 2008 027 381 A1 beschriebene Glasfaseranschlussdose weist außerdem mindestens eine Zuführung für ein Glasfaserkabel und eine Aufnahme für eine separat ausgebildete Kupplung auf.

Wie eingangs erwähnt ist in der Glasfasertechnik insbesondere ein Schutz der Verbindungsstellen der Glasfaserkabel vor mechanischer Belastung häufig notwendig. Beispielsweise soll ein Herausziehen eines Glasfaserkabels aus einer Glasfaseranschlussdose nicht ohne weiteres möglich sein. Um mechanische Kräfte möglichst von den Verbindungsstellen, insbesondere von den Spleißen, fernzuhalten, ist es aus der Praxis bekannt, zugeführte Glasfaserkabel an dem Gehäuse der Glasfaseranschlussdose durch Kabelbinder ausreichend zu fixieren. Eine derartige Zugentlastung über einen Kabelbinder ist jedoch keine vollumfänglich zufriedenstellende Lösung des Problems. So kann eine ggf. zu starke Fixierung durch die Kabelbinder aufgrund von Quetschung zu einem Bruch der Glasfasern in dem Glasfaserkabel führen oder eine zu schwache Fixierung keine ausreichende Zugentlastung ermöglichen.

Um eine verbesserte Zugentlastung zu ermöglichen, ist es auch bekannt, in der Glasfaseranschlussdose eine entsprechende Zugentlastungsvorrichtung vorzusehen. Beispielsweise zeigt die WO 2009/149813 A1 eine Zugentlastungsvorrichtung, insbesondere als Bestandteil einer Glasfaseranschlussdose. Die gezeigte Zugentlastung ist dabei mindestens zweiteilig ausgebildet, wobei ein inneres Teil eine Aufnahme zum Einlegen mindestens eines Teils des Kabels, insbesondere von Kevlarfasern (nachfolgend als Kevlargarn bezeichnet) eines Glasfaserkabels, und einen Wickelbereich aufweist. Durch Drehung des inneren Teils mittels eines Werkzeugs wird das Kevlargarn auf den Wickelbereich aufgewickelt. Ein äußeres Teil weist mindestens ein Fixiermittel auf, das bei einer Zusammenfügung der Zugentlastungsvorrichtung das Kabel oder einen Teil des Kabels, insbesondere das Kevlargarn, gegen den Wickelbereich drückt. Hierdurch kann das Kabel ausreichend festgehalten werden.

Weiter zeigt die DE 10 2006 046 181 B4 eine Zugentlastungsvorrichtung für ein Glasfaserkabel, umfassend einen Grundkörper und einen Fixierkörper. Eine Zugentlastung wird abermals durch Verklemmen des Kevlargarns eines Glasfaserkabels im Inneren der Zugentlastungsvorrichtung erreicht.

Zum Stand der Technik wird zunächst verwiesen auf die WO 2012/074685 A2. Dort ist ein im Wesentlichen quaderförmiges Kabelzugabfangelement für Glasfaserkabel beschrieben, dessen Grundkörper einerseits elastische Rastelemente und andererseits stirnseitig in einer Vertiefung eine Befestigungsschraube zum Befestigen von Garn im Kabelmantel aufweist.

Die US 5,503,369 zeigt eine Glasfaserdurchführung für eine Gebäudewand, die im Wesentlichen aus einem außenseitig zu montierenden Biegeschutzteil und einem in einer Bohrung der Wand zu verankernden und das Biegeschutzteil dadurch haltenden hohlzylindrischen Stöpsel mit einer strukturierten Mantelfläche besteht.

Ferner wird verwiesen auf die US 2012/0106914 A1 mit einer verschraubbaren und abgedichteten Glasfaserdurchführung für eine Wand, die ein inneres röhrenförmiges Bauteil aufweist.

Außerdem wird verwiesen auf die US 2008/0080831 A1 mit einer weiteren Glasfaserdurchführung für eine Wand, die elastische Rastelemente zur Verankerung in der Wand und ein vorstehendes Element mit einer sich konisch verjüngenden Außenmantelfläche aufweist, die zum Verklemmen von Zugentlastungsfasern dient.

Der vorliegenden Erfindung liegt die Aufgabe zugrunde, ein Zugentlastungselement für ein Kabel, insbesondere Glasfaserkabel, mit im Kabelmantel integriertem Garn zu schaffen, das vor allem im Bereich der Glasfasernetzwerktechnik universell und als Alternative zum Stand der Technik einsetzbar ist und dabei eine günstige Möglichkeit zur Fixierung dieses Garns bietet. Der vorliegenden Erfindung liegt auch die Aufgabe zugrunde, eine Glasfaseranschlussdose zur Aufnahme eines Kabelabschnitts unter Einbeziehung eines Zugentlastungselements zu schaffen.

Diese Aufgabe wird für das Kabelzugabfangelement mit den in Anspruch 1 aufgeführten Merkmalen gelöst. Die abhängigen Ansprüche betreffen vorteilhafte Ausführungsformen und Varianten der Erfindung.

Das Kabelzugabfangelement umfasst einen Grundkörper, der elastische Rastelemente zur verrastenden Befestigung des Kabelzugabfangelements in einer korrespondierenden Aufnahme aufweist. Das Kabelzugabfangelement umfasst weiter wenigstens ein zylinderförmiges Kabelführungsröhrchen, das sich durch den Grundkörper erstreckt und mit zumindest einem Ende aus dem Grundkörper herausragt, wobei das zumindest eine herausragende Ende des Kabelführungsröhrchens an dem Außenumfang seiner Mantelfläche eine Strukturierung aufweist.

Dadurch, dass das Kabelzugabfangelement Rastelemente aufweist, die mit einer korrespondierenden Aufnahme einer Glasfaseranschlussdose zusammenzuwirken vermag, kann das Kabelzugabfangelement sicher und komfortabel an einer derartigen Glasfaseranschlussdose befestigt bzw. eingeclipst werden. Selbstverständlich kann das Kabelzugabfangelement auch an einer beliebigen anderen Aufnahme, die mit den Rastelementen korrespondiert, befestigt werden.

Eine effiziente Zugentlastung für ein Glasfaserkabel kann damit wie folgt erreicht werden. Das Glasfaserkabel kann zunächst durch das bzw. die Kabelführungsröhrchen durch das Kabelzugabfangelement geschoben werden. Das herausragende Ende des Glasfaserkabels kann anschließend von seiner Ummantelung befreit werden, um in dem Kabelmantel angeordnetes Garn, beispielsweise aus Kevlar oder Aramid, sowie das sogenannte Röhrchen, welches die Glasfaser beinhaltet, freizulegen. Selbstverständlich können in einem Glasfaserkabel oder sonstigem Kabel, auf das die Erfindung angewendet wird, auch mehrere Glasfasern bzw. Kabeladern vorgesehen sein. Zur Fixierung des Glasfaserkabels an dem Kabelzugabfangelement kann das Garn umgestülpt und über das herausragende Ende des Kabelführungsröhrchens gelegt werden. Zur Fixierung des Glasfaserkabels mithilfe des Garns kann schließlich eine separat ausgebildete Tülle über das herausragende Ende des Kabelführungsröhrchens geschoben werden, wodurch in Zusammenwirkung mit der Strukturierung am Außenumfang der Mantelfläche des Kabelführungsröhrchens eine ausreichende Verklemmung des Garns, beispielsweise Kevlargarns, ermöglicht wird. Die separat ausgebildete Tülle kann hierzu entsprechend passgenau ausgebildet sein, um eine ausreichende Quetschung des Garns an der Strukturierung des Kabelführungsröhrchens zu ermöglichen. Die separate Tülle kann aus Gummi oder einem gummiartigen Material bestehen.

Selbstverständlich kann ein derartiges Kabelzugabfangelement auch für eine beliebig andere Kabelart, beispielsweise für ein Koaxialkabel, eingesetzt werden.

Erfindungsgemäß ist der Grundkörper des Kabelzugabfangelements flächensymmetrisch zu einer Mittelebene ausgebildet ist, die orthogonal zur Längsachse des wenigstens einen Kabelführungsröhrchens verläuft.

Eine derartige symmetrische Ausbildung des Kabelzugabfangelements kann von Vorteil sein, da dann das zylinderförmige Kabelführungsröhrchen an beiden Enden des Grundkörpers gleichermaßen herausragt und das Glasfaserkabel besser bzw. über eine längere Wegstrecke zu führen vermag. Eine symmetrische Anordnung kann außerdem von Vorteil sein, um Montagefehler bei der Installation des Glasfasernetzwerks zu verringern.

Es kann vorgesehen sein, dass der Grundkörper des Kabelzugabfangelements mit den elastischen Rastelementen und/oder mit dem wenigstens einen Kabelführungsröhrchen einteilig ausgebildet ist.

Eine einteilige Ausbildung des Kabelzugabfangelements kann fertigungstechnisch und wirtschaftlich von Vorteil sein. Eine einteilige Ausgestaltung ist außerdem als robuster anzusehen als eine mehrteilige Ausgestaltung.

Kabel und Buchsen für die Glasfasertechnik werden meist in standardisierten Ausführungen, beispielsweise als LC-Steckverbinder, SC-Steckverbinder und E-2000-Steckverbinder verwendet. Es kann somit von Vorteil sein, wenn der Grundkörper des Kabelzugabfangelements durch seine gegebene äußere Form und die Anordnung und Anzahl seiner Rastelemente mechanisch kompatibel zu einer standardisierten Aufnahme für einen LC-Steckverbinder oder SC-Steckverbinder oder E-2000-Steckverbinder für Glasfaserkabel ausgebildet ist. Diese Auflistung ist selbstverständlich nicht abschließend und weitere alternative Varianten sind ebenfalls denkbar.

Dadurch, dass das Kabelzugabfangelement eine standardisierte Form aufweist, kann es in vorteilhafter Weise innerhalb der gesamten Glasfasernetzwerktechnik und somit auch unabhängig von einer Glasfaseranschlussdose verwendet werden. In vorteilhafter Weise kann das Kabelzugabfangelement auch in Aufnahmen einrasten, bzw. eingeclipst werden, die eigentlich zur Aufnahme einer Buchse bzw. einer Kupplung für Steckverbinder für die Glasfaseranschlusstechnik oder anderer Elemente, die die gleichen äußeren Abmessungen haben, vorgesehen sind. Bestehende Systeme können somit in vorteilhafter Weise mit einem Zugabfang erweitert werden.

Selbstverständlich kann der Fachmann, sofern er es für notwendig erachtet, das Kabelzugabfangelement auch mechanisch kompatibel zu einer anderweitigen Steckverbinderart, auch außerhalb der Glasfasertechnik, auslegen.

In einer Weiterbildung kann vorgesehen sein, dass die Strukturierung an dem Außenmantel des zumindest einen herausragenden Endes des Kabelführungsröhrchens des Kabelzugabfangelements durch umlaufende zahnförmige Erhebungen insbesondere zur Verbindung mit einer korrespondierenden Tülle gebildet ist.

In der Praxis hat sich gezeigt, dass insbesondere die Verwendung von zahnförmigen Erhebungen eine ausreichend starke Verklemmung bzw. Fixierung des Glasfaserkabels mithilfe des aus der Ummantelung verwendeten Garns, beispielsweise Kevlargarns, in Verbindung mit der Tülle ermöglicht.

Es kann vorgesehen sein, dass die zahnförmigen Erhebungen in Richtung der Mittelebene des Kabelzugabfangelements hin ansteigen. In vorteilhafter Weise kann dadurch eine Tülle leichter auf das Kabelführungsröhrchen aufgeschoben werden und eine entgegengesetzte Auszugsbewegung der Tülle erschwert werden.

In einer Ausbildung der Erfindung kann vorgesehen sein, dass die zahnförmigen Erhebungen einen Abstand zueinander aufweisen, der größer ist als die Höhe der Erhebung.

Selbstverständlich kann der Fachmann auch eine beliebig andere Geometrie der Strukturierung der Mantelfläche der Kabelführungsröhrchen vorsehen.

In einer Weiterbildung der Erfindung kann vorgesehen sein, dass das Kabelzugabfangelement einen Innendurchmesser des Kabelführungsröhrchens von 1 mm bis 10 mm, besonders bevorzugt 3 mm bis 5 mm aufweist.

Es kann von Vorteil sein das Kabelzugabfangelement bezüglich des Innendurchmessers des Kabelführungsröhrchens an das zu verwendende Glasfaserkabel anzugleichen. Durch eine passgenaue Führung des Glasfaserkabels kann eine Fixierung bzw. ein Kabelzugabfang verstärkt werden.

In einer Ausbildung kann das Kabelzugabfangelement wenigstens zwei Kabelführungsröhrchen aufweisen, die im Wesentlichen parallel zueinander durch den Grundkörper verlaufen.

Eine derartige Ausführung ermöglicht es, einen Zugabfang für beispielsweise zwei Glasfaserkabel vorzunehmen. Dabei kann ein derartiges ("Duplex"-) Kabelzugabfangelement zur Aufnahme von zwei Glasfaserkabeln in einer Glasfaseranschlussdose verwendet werden. Es können aber auch mehr als zwei Glasfaserkabel aufgenommen werden, beispielsweise drei, vier oder fünf.

In einer Ausbildung der Erfindung kann das Kabelzugabfangelement aus Kunststoff gefertigt sein. Das Kabelzugabfangelement kann insbesondere gegossen werden.

Insbesondere kann vorgesehen sein, dass das Kabelzugabfangelement in seiner Dimensionierung und Bauform zur Aufnahme in einer Glasfaseranschlussdose und zur Verwendung als Zugentlastung eines darin aufgenommenen Kabelabschnitts für Glasfaserkabel ausgelegt ist.

Hierdurch kann ein System aus einer Glasfaseranschlussdose und einem Kabelzugabfangelement bereitgestellt werden.

In einer Ausführung kann insbesondere vorgesehen sein, dass die Glasfaseranschlussdose ein Gehäuse zur Aufnahme eines Kabelabschnitts eines Glasfaserkabels aufweist und weiter wenigstens eine Ausnehmung zur Kabelzuführung in das Innere des Gehäuses, einen Anschlussbereich für wenigstens einen separat ausgebildeten Steckverbinder, sowie einen Kabelfixierungsbereich, der Mittel zur Aufnahme und Befestigung eines an dem Kabelabschnitt angebrachten Kabelzugabfangelements aufweist, umfasst.

Durch die Mittel zur Aufnahme und Befestigung eines an dem Kabelabschnitt angebrachten Kabelzugabfangelements kann der Kabelfixierungsbereich der Glasfaseranschlussdose eine technisch sicherere Zugentlastung durch das von der Glasfaseranschlussdose separat ausgebildete, erfindungsgemäße Kabelzugabfangelement ermöglichen. Zudem wird eine einfache und sichere Befestigung des Kabelabschnitts im Inneren der Glasfaseranschlussdose erreicht, ohne die aus dem Stand der Technik bekannten Nachteile mit sich zu bringen.

Eine derartige Glasfaseranschlussdose kann selbstverständlich auch zur Aufnahme anderer Kabelarten, beispielsweise zur Aufnahme von Telefon-, Kupfer-, Doppelader- oder Koaxialkabeln verwendet werden. Die Glasfaseranschlussdose kann außerdem auch zur Aufnahme mehrerer Kabelabschnitte eines Glasfaserkabels oder zur Aufnahme mehrerer Kabelabschnitte mehrerer Glasfaserkabel verwendet werden.

Weiterhin kann die Glasfaseranschlussdose zusätzliche Mittel zur Befestigung des im Inneren des Gehäuses aufgenommenen Kabelabschnitts aufweisen.

Besonders vorteilhaft an dieser Lösung ist, dass die Glasfaseranschlussdose universell im Bereich der Glasfasernetzwerktechnik einsetzbar ist. Dies gilt insbesondere, da der Kabelfixierungsbereich auf mehrere Arten verwendet werden kann. So können die zusätzlichen Mittel zur Befestigung des im Inneren des Gehäuses aufgenommenen Kabelabschnitts zur Fixierung eines Glasfaserkabels beispielsweise durch einen Kabelbinder verwendet werden, wenn der Kabelabschnitt kein daran fest angebrachtes Element wie ein Kabelzugabfangelement aufweist.

Es kann weiter vorgesehen sein, dass das Gehäuse der Glasfaseranschlussdose ein Deckelteil zum Öffnen und Schließen der Glasfaseranschlussdose aufweist, wobei das Deckelteil eine Vertiefung an einer in geschlossenem Zustand der Glasfaseranschlussdose sichtbaren Außenfläche zur Aufnahme einer Kennzeichnung und/oder einer Plombe und/oder eines Siegels aufweist, wobei sich die Vertiefung über die komplette Breite des Deckelteils erstreckt.

Dadurch, dass ein Deckelteil für die Glasfaseranschlussdose vorgesehen ist, können die in der Glasfaseranschlussdose aufgenommenen Elemente und Verbindungsstellen, beispielsweise die Spleiße, vergleichsweise gut und einfach vor Umwelteinflüssen geschützt werden. Es kann vorgesehen sein, dass das Deckelelement schwenkbar in der Art eines Scharniers an dem Unterteil befestigt ist. Es kann außerdem vorgesehen sein, dass das Deckelelement in das Unterteil einrastbar ausgebildet ist.

Mit einer Kennzeichnung ist vorliegend eine Etikettierung, beispielsweise durch ein Klebeetikett oder ein Kennzeichnungsschild, gemeint. In vorteilhafter Weise kann dadurch ein Telekommunikationsdienstanbieter eine Kennzeichnung der Glasfaseranschlussdose mit einem Firmenlogo oder ähnlichem vornehmen. Dadurch, dass die Aufnahme der Kennzeichnung in Form einer Vertiefung ausgebildet ist, kann die Kennzeichnung sicher aufgenommen werden und ragt nicht störend aus dem Deckelteil heraus.

Die Ausbildung einer Vertiefung am Deckelteil, die sich von einer Seite des Deckelteils zu dessen anderer Seite erstreckt, kann außerdem von Vorteil sein um eine Versiegelung bzw. Verplombung der Glasfaseranschlussdose vorzunehmen. Hierdurch kann ein unautorisiertes Öffnen der Glasfaseranschlussdose und somit ein unberechtigtes Manipulieren des Glasfasernetzwerks verhindert bzw. festgestellt werden. Dadurch, dass die Vertiefung über die komplette Breite des Deckelteils verläuft kann eine derartige Versiegelung bzw. Verplombung sicherer vorgenommen werden, als dies mit den Glasfaseranschlussdosen des Stands der Technik möglich ist. Insbesondere zeigt die DE 10 2008 027 381 A1 eine derartige Vertiefung nur auf einer Seite des Deckelteils.

Alternativ kann die beschriebene Vertiefung, falls der Fachmann dies wünschen sollte, auch nur verkürzt bzw. einseitig eingearbeitet sein und sich somit nicht über die komplette Breite der Anschlussdose erstrecken. Eine Vertiefung kann ggf. auch mittig innerhalb des Deckelteils eingebracht sein.

In einer Ausbildung der Erfindung kann es vorgesehen sein, dass die Mittel zur Befestigung des im Inneren des Gehäuses aufgenommenen Kabelabschnitts und/oder die Mittel zur Aufnahme und Befestigung eines Kabelzugabfangelements einteilig mit dem Gehäuse ausgebildet sind und insbesondere eine unmittelbare Befestigung des Kabelabschnitts und/oder des Kabelzugabfangelements an dem Gehäuse ermöglichen.

Eine einteilige Ausbildung kann konstruktive und somit wirtschaftliche Vorteile in der Fertigung der Glasfaseranschlussdose mit sich bringen. Eine einteilige Ausführung kann weiterhin robuster sein als eine mehrteilige Ausführung.

In einer Weiterbildung der Erfindung kann vorgesehen sein, dass der Anschlussbereich eine oder mehrere Sollbruchstellen am Gehäuse der Glasfaseranschlussdose aufweist.

Die Vorsehung von Sollbruchstellen anstelle von vorgegebenen Durchbrüchen zur Montage der separat ausgebildeten Steckverbinder kann einen optischen Vorteil mit sich bringen, wenn die Glasfaseranschlussdose mit weniger Steckverbindern bzw. Buchsen ausgestattet werden soll, als die Glasfaseranschlussdose theoretisch aufnehmen kann. Es kann beispielsweise in der Glasfaseranschlussdose die Verwendung von zwei Buchsen bautechnisch vorgesehen sein, wobei jedoch nur eine Buchse installiert wird.

In einer Ausführung der Erfindung kann vorgesehen sein, dass der Anschlussbereich Mittel zur Aufnahme einer Buchse für Glasfaserkabel bzw. Lichtwellenleiter aufweist.

Da Kabel und Buchsen für die Glasfasertechnik, wie bereits erwähnt, meist in standardisierten Ausführungen, beispielsweise als LC-Steckverbinder, SC-Steckverbinder und E-2000-Steckverbinder verwendet werden, kann es somit von Vorteil sein, wenn der Anschlussbereich entsprechende Mittel zur Aufnahme eines solchen standardisierten Steckverbinders aufweist. Ein standardisierter Steckverbinder kann somit von einem Monteur ohne größeren Aufwand in den Anschlussbereich, beispielsweise nach Herausbrechen der Sollbruchstelle, eingeclipst bzw. eingerastet werden.

Insbesondere kann der Anschlussbereich für zwei separat ausgebildete und optional unterschiedlich ausgebildete Steckverbinder ausgelegt sein.

Vorzugsweise kann das Mittel zur Befestigung des im Inneren des Gehäuses aufgenommenen Kabelabschnitts in dem Kabelfixierungsbereich einen Montagepunkt für einen Kabelbinder aufweisen.

In einer Weiterbildung der Erfindung können Befestigungsmittel zur Befestigung der Glasfaseranschlussdose an umgebenden Bauteilen, beispielsweise einer Hauswand oder einem Verteilerkasten, vorgesehen sein.

Für eine komfortable Montage kann eine Kombination aus vertikalen und horizontalen Langlöchern und/oder Bohrungen vorgesehen sein.

Insbesondere können mittig der Glasfaseranschlussdose ein horizontales Langloch und an beiden Seiten der Glasfaseranschlussdose zwei vertikale Langlöcher vorgesehen sein.

Es können mehrere Mittel, beispielsweise auch Haken oder Ähnliches, zur Befestigung der Glasfaseranschlussdose vorgesehen sein, um eine individuelle und universelle Befestigung der Glasfaseranschlussdose an einem angrenzenden Bauteil zu ermöglichen.

In einer vorteilhaften Weiterbildung kann vorgesehen sein, dass die Mittel zur Aufnahme und Befestigung eines Kabelzugabfangelements dazu ausgebildet sind, ein Kabelzugabfangelement mit einem standardisierten Grundkörper in der Ausführung als LC-Steckverbinder und/oder SC-Steckverbinder und/oder E-2000-Steckverbinder für Glasfaserkabel aufzunehmen und unmittelbar an dem Gehäuse zu fixieren. Diese Auflistung ist selbstverständlich nicht abschließend und weitere alternative Varianten sind ebenfalls denkbar.

Es ist von Vorteil, die Mittel zur Aufnahme und Befestigung eines Kabelzugabfangelements korrespondierend zu einem standardisierten Steckverbinder der Glasfasernetzwerktechnik auszubilden. Die Glasfaseranschlussdose kann dadurch flexibler für verschiedene Glasfasernetzwerke verwendbar sein.

Selbstverständlich kann der Fachmann die Glasfaseranschlussdose auch zur Aufnahme eines Kabelabschnitts eines von einem Glasfaserkabel unterschiedlichen Kabels, beispielsweise eines Telefon-, Kupfer-, Doppelader- oder Koaxialkabels, verwenden. Die Mittel zur Aufnahme und Befestigung eines Kabelzugabfangelements können dann ggf. auch korrespondierend zu einem beliebigen anderen Steckverbinder ausgebildet sein.

In einer Ausgestaltung der Erfindung kann vorgesehen sein, dass der Anschlussbereich wenigstens einen Durchbruch an dem Gehäuse umfasst und dazu ausgebildet ist, wenigstens einen separat ausgebildeten Steckverbinder aufzunehmen und an dem Gehäuse zu fixieren, insbesondere eine standardisierte Buchseneinheit für Glasfaserkabel der Ausführung LC und/oder SC und/oder E-2000 aufzunehmen und an dem Gehäuse zu fixieren. Diese Auflistung ist selbstverständlich nicht abschließend und weitere alternative Varianten sind ebenfalls denkbar. Es kann außerdem auch eine Kompatibilität mit Buchsenanordnungen, die nicht der Glasfasertechnik entstammen, hergestellt werden.

In einer Weiterbildung kann auch vorgesehen sein, dass eine Kabelführungseinrichtung zur Führung des im Inneren des Gehäuses aufgenommenen Kabelabschnitts vorgesehen ist, wobei die Kabelführungseinrichtung insbesondere eine Anzahl von Anlageflächen aufweist, die eine rollenförmige Aufwicklung des Kabelabschnitts im Inneren des Gehäuses ermöglichen.

Insbesondere beim Spleißen von Glasfasern, beispielsweise mit Lichtbogenspleißgeräten, kann es erforderlich sein, eine größere Strecke des Glasfaserkabels in der Glasfaseranschlussdose zu hinterlegen, um gegebenenfalls auch nach einer Erstinstallation des Glasfasernetzwerks noch eine Neuverspleißung bzw. mehrere Neuverspleißungen vornehmen zu können. Es kann dabei von Vorteil sein, das Glasfaserkabel vor oder nach dem Einlegen in die Glasfaseranschlussdose über einen Bereich von bis zu einigen Metern von der Ummantelung zu befreien. Dadurch kann das Kabel flexibler in der Glasfaseranschlussdose aufgenommen werden und weist nicht zuletzt einen geringeren Platzbedarf auf.

Es kann vorgesehen sein, dass die Anlageflächen zumindest annähernd kreisförmig zueinander angeordnet sind. Es kann dabei sinnvoll sein, einen Radius von 30 mm nicht zu unterschreiten, um insbesondere die Signaldämpfung des Kabels in einem akzeptablen Bereich zu halten und ggf. die Gefahr des Brechens eines aufgewickelten Glasfaserkabels bzw. einer aufgewickelten Glasfaser zu vermeiden oder zu reduzieren.

In einer Weiterbildung kann es vorgesehen sein, dass wenigstens ein Teil der Anlageflächen die Kabelrolle umgreift, um ein Herausfallen der Kabelrolle zu verhindern.

In einer Weiterbildung kann außerdem vorgesehen sein, dass die Glasfaseranschlussdose einen Spleißhalteraufnahmebereich zur Aufnahme eines separaten Spleißhalters oder einen einteilig mit dem Gehäuse ausgebildeten Spleißhalter umfasst.

Die Vorsehung eines Spleißhalters (separat oder einteilig) in der Glasfaseranschlussdose kann von Vorteil sein, um einen oder mehrere Spleiße gegen Verrutschen oder sonstige mechanische Belastung zu schützen. Spleißhalter, sind, wie aus dem Stand der Technik bekannt, meist ähnlich einem Kamm aufgebaut, wobei zwischen die Zähnen die einzelnen Spleiße parallel zueinander eingelegt und festgehalten werden können. Die erfindungsgemäße Glasfaseranschlussdose kann beispielsweise zwei Zentrierpunkte und einen Fixierungspunkt zur Aufnahme eines separat ausgebildeten Spleißhalters aufweisen. In der Ausführung, in der der Spleißhalter nicht mit dem Gehäuse ausgebildet ist, kann ein separater Spleißhalter in einer für die Anwendung sinnvoll erscheinenden Gestaltung, beispielsweise bezogen von einem Drittanbieter, leicht in die Glasfaseranschlussdose integriert werden.

In einer Ausführung kann vorgesehen sein, dass das Unterteil eine Rückenplatte sowie mehrere diese seitlich begrenzende Seitenwände umfasst, wobei die wenigstens eine Ausnehmung zur Kabelzuführung als Durchbruch durch die Rückenplatte des Unterteils und/oder durch eine der Seitenwände des Unterteils ausgebildet ist.

Das Deckelteil der Glasfaseranschlussdose kann eine oder mehrere herausbrechbare Blenden umfassen, um beispielsweise eine Ausnehmung zur Kabelzuführung durch eine Seitenwand des Unterteils bei Nichtverwendung dieser Zuführung optisch abzudecken, wenn das Deckelteil der Glasfaseranschlussdose geschlossen ist.

Es kann insbesondere vorgesehen sein, eine Kabelzuführung in Form eines Durchbruchs durch die Rückenplatte des Unterteils und durch einen Durchbruch durch die Seitenwand des Unterteils zu ermöglichen. Hierdurch kann die Glasfaseranschlussdose universell eingesetzt werden. Die Glasfaseranschlussdose kann beispielsweise auf ein separates Gehäuse oder eine Unterputzzuführung eines Kabels aufgesetzt und montiert werden. Die Kabelzuführung des Glasfaserkabels kann somit nach Schließen des Deckelteils unsichtbar sein. Die Glasfaseranschlussdose kann allerdings auch geeignet sein, eine Kabelzuführung durch eine Aufputzzuführung eines Kabels aufzunehmen, wozu ein Durchbruch durch eine Seitenwand des Unterteils genutzt werden kann.

Es kann insbesondere vorgesehen sein, dass die Mittel zur Aufnahme und Befestigung eines Kabelzugabfangelements dazu ausgebildet sind, ein erfindungsgemäßes Kabelzugabfangelement für Glasfaserkabel aufzunehmen und zu fixieren.

Nachfolgend werden Ausführungsbeispiele der Erfindung anhand von Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann zu weiteren sinnvollen Kombinationen mit Merkmalen anderer Ausführungsbeispiele verbunden werden.

Es zeigen schematisch:
- Figur 1: eine räumliche Darstellung eines erfindungsgemäßen Kabelzugabfangelements für Glasfaserkabel;
- Figur 2: eine Draufsicht eines erfindungsgemäßen Kabelzugabfangelement für Glasfaserkabel;
- Figur 3: eine Seitenansicht eines erfindungsgemäßen Kabelzugabfangelements für Glasfaserkabel;
- Figur 4: eine Vorderansicht eines erfindungsgemäßen Kabelzugabfangelements für Glasfaserkabel;
- Figur 5: eine räumliche Darstellung eines Glasfaserkabels zur Verwendung mit der Erfindung;
- Figur 6a: eine räumliche Darstellung der Montage eines Glasfaserkabels an dem Kabelzugabfangelement für Glasfaserkabel;
- Figur 6b: eine räumliche Darstellung der Montage eines Glasfaserkabels an dem erfindungsgemäßen Kabelzugabfangelement für Glasfaserkabel mit zwei separaten Tüllen;
- Figur 7: eine räumliche Darstellung des Inneren einer geöffneten erfindungsgemäßen Glasfaseranschlussdose;
- Figur 8: eine räumliche Darstellung einer erfindungsgemäßen Glasfaseranschlussdose mit geschlossenem Deckelteil;
- Figur 9: eine räumliche Darstellung einer erfindungsgemäßen Glasfaseranschlussdose in einer rückseitigen Ansicht;
- Figur 10a: eine Seitenansicht einer erfindungsgemäßen Glasfaseranschlussdose mit geöffnetem Deckelteil; und
- Figur 10b: eine Seitenansicht der erfindungsgemäßen Glasfaseranschlussdose mit geschlossenem Deckelteil.

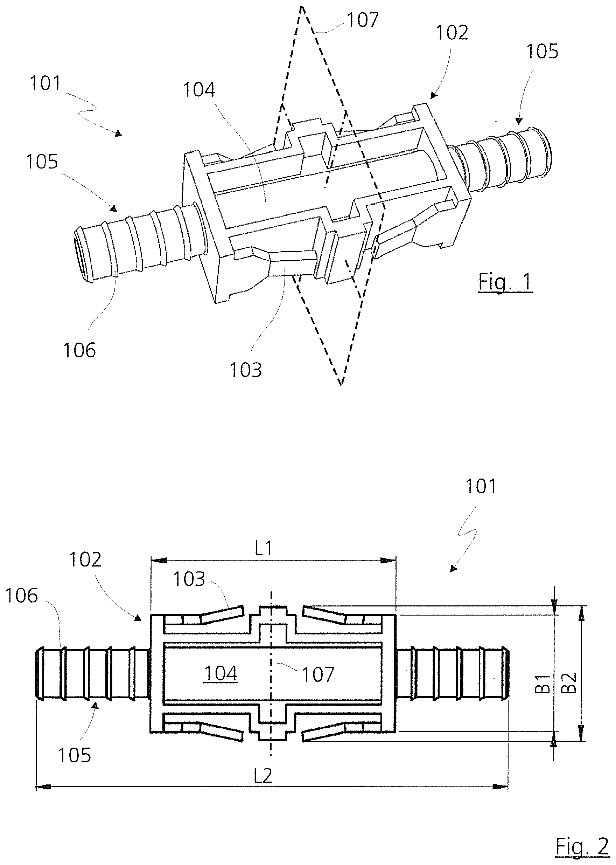

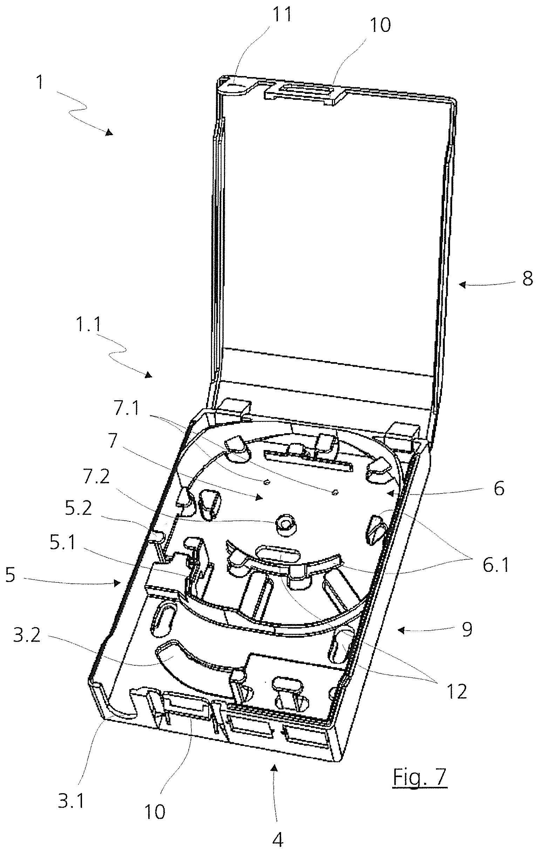

Die Figur 1 zeigt eine räumliche Darstellung eines Ausführungsbeispiels eines erfindungsgemäßen Kabelzugabfangelements 101 für Glasfaserkabel. Das Kabelzugabfangelement 101 weist einen Grundkörper 102 mit elastischen Rastelementen 103 zur verrastenden Befestigung des Kabelzugabfangelements 101 in einer korrespondierenden Aufnahme, beispielsweise in Form der - in Figur 7 gezeigten - Mittel zur Aufnahme und Befestigung 5.2 einer Glasfaseranschlussdose 1, auf. Das Kabelzugabfangelement 101 umfasst ferner ein zylinderförmiges Kabelführungsröhrchen 104, das sich durch den Grundkörper 102 erstreckt und mit seinen Enden 105 aus dem Grundkörper 102 herausragt, wobei die herausragenden Enden 105 des Kabelführungsröhrchens 104 an dem Außenumfang der Mantelfläche eine Strukturierung 106 aufweisen.

Das im Ausführungsbeispiel dargestellte Kabelzugabfangelement 101 weist einen flächensymmetrischen Aufbau zu einer Mittelebene 107 auf, die orthogonal zur Längsachse des wenigstens einen Kabelführungsröhrchens 104 verläuft. Der Grundkörper 102 ist dabei mit den elastischen Rastelementen 103 und dem Kabelführungsröhrchen 104 einteilig ausgebildet.

Das Kabelzugabfangelement 101 ist in seiner gegebenen äußeren Form und der Anordnung und Anzahl der Rastelemente 103 mechanisch kompatibel zu einer standardisierten Aufnahme für einen Steckverbinder der Glasfasertechnik ausgebildet.

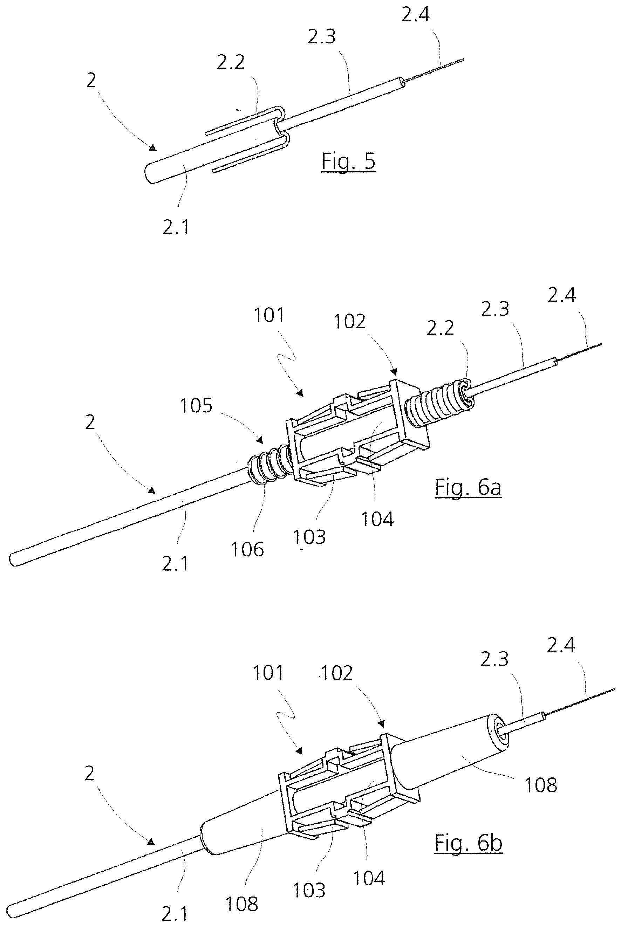

Die Strukturierung 106 des Kabelführungsröhrchens 104 an den herausragenden Enden 105 des Kabelführungsröhrchens 104 ist in Form umlaufender zahnförmiger Erhebungen gebildet. Wie in der Figur 1 erkennbar, steigen die zahnförmigen Erhebungen in Richtung der Mittellängsebene 107 an und bilden so eine Verzahnung, die in Richtung der Mittellängsebene 107 geneigt ist. Durch diese spezifische Ausgestaltung der Strukturierung wird das Aufbringen der Tüllen 108 (siehe Figur 6b) vereinfacht und ein unerwünschtes Abziehen der Tüllen 108 erschwert.

In Figur 2 ist eine Draufsicht auf das Kabelzugabfangelement 101 der Figur 1 dargestellt. Dabei kann es von Vorteil sein, wenn der Grundkörper 102 eine Länge L₁ und eine Breite B₁ aufweist, wobei die Länge L₁ beispielsweise wenigstens doppelt so groß ist wie die Breite B₁. Beispielsweise können eine Länge L₁ von mehr als 20 mm und eine Breite B₁ von mehr als 10 mm vorgesehen sein. Die seitlich aus dem Grundkörper 102 herausragenden Rastelemente 103 vergrößern die Breite des Grundkörpers 102 dabei in einem kräftefreien Zustand auf die Breite B₂. Insgesamt kann das Kabelzugabfangelement 101 eine Gesamtlänge L₂ aufweisen, die beispielsweise mehr als dreimal so groß ist wie die Breite B₂. Beispielsweise kann die Länge L₂ mehr als 50 mm betragen.

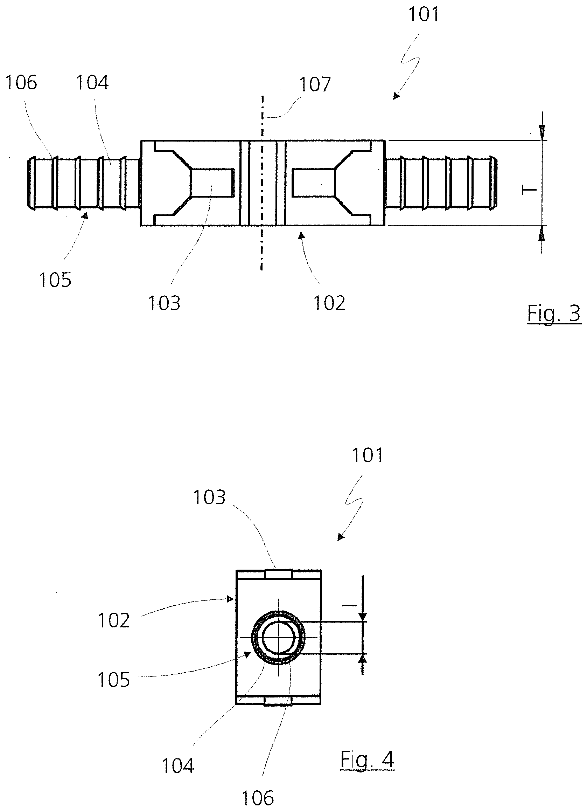

In Figur 3 ist eine Seitenansicht des Kabelzugabfangelements 101 dargestellt. Die Tiefe des Grundkörpers 102 ist in dieser Ausführungsform als T bezeichnet und beträgt beispielhaft mehr als 9 mm. In einer Ausführung des Kabelzugabfangelements 101, bei der mehr als ein Kabelführungsröhrchen 104 vorgesehen ist, also einer Duplex-Ausführung (nicht dargestellt), kann die Tiefe T des Kabelzugabfangelements 101 entsprechend vergrößert sein, wobei ein zweites Kabelführungsröhrchen auf das erste Kabelführungsröhrchen 104 bzw. den Grundkörper 102 aufgesetzt sein kann und parallel zu dem ersten Kabelführungsröhrchen 104 verläuft.

In Figur 4 ist eine Vorderansicht mit Blick durch das zylinderförmige Kabelführungsröhrchen 104 dargestellt. Ein Innendurchmesser I des Kabelführungsröhrchens 104 kann beispielsweise etwa 4 mm betragen. Der Innendurchmesser I kann allerdings auch 1 mm bis 10 mm, besonders bevorzugt 3 mm bis 5 mm betragen.

Figur 5 zeigt einen beispielhaften Kabelabschnitt 2 eines Glasfaserkabels in einer räumlichen Darstellung. Der Kabelabschnitt 2 ist teilweise abisoliert und weist einen Außenmantel 2.1 auf, durch den sich eine Schutzbeschichtung bzw. durch den sich schützendes Garn 2.2, beispielsweise aus Kevlar oder Aramid, sowie das sogenannte Röhrchen 2.3 erstrecken. Das dargestellte Garn 2.2 ist in den Figuren 5 und 6 in zwei Strängen zusammengewickelt; dies ist für die Funktionsweise der Erfindung allerdings nicht erforderlich. Innerhalb des Röhrchens 2.3 befindet sich der Kern, also die eigentliche Glasfaser 2.4.

In Figur 6a ist dargestellt, wie ein Kabelabschnitt 2 eines Glasfaserkabels der Figur 5 an einem Kabelzugabfangelement 101 für Glasfaserkabel montiert werden kann. In einem ersten Schritt wird der Kabelabschnitt 2 zunächst durch das Kabelführungsröhrchen 104 geschoben, wobei es an dem anderen Ende des Kabelzugabfangelements 101 aus dem Kabelführungsröhrchen 104 herausragt. Der Kabelabschnitt 2 kann an dieser Stelle von seinem Kabelmantel 2.1 befreit werden, um das Garn 2.2 und das Röhrchen 2.3 zugänglich zu machen. Das Garn 2.2, das ein stabiles Element innerhalb des Kabelabschnitt 2 darstellt und insgesamt eine hohe Stabilität aufweist, kann anschließend entgegen der Längsrichtung des Kabelabschnitts 2 umgeklappt und über das Kabelführungsröhrchen 104, aus dem der Kabelabschnitt 2 herausragt, gezogen werden.

In Figur 6b ist gezeigt, wie das Kabelzugabfangelement 101 in Verbindung mit korrespondierenden Tüllen 108 schließlich einen Zugabfang ermöglicht. Die Tüllen 108 korrespondieren dabei derart mit der Strukturierung 106 der Kabelführungsröhrchen 104, dass das umgestülpte Garn 2.2 kraftschlüssig an dem Kabelführungsröhrchen 104 fixiert ist. Dies kann durch entsprechendes Quetschen erfolgen. Die Tüllen 108 können hierfür passgenau ausgelegt und aus Gummi oder einem gummiartigen Material gefertigt sein. Aufgrund der Symmetrie des Kabelzugabfangelements 101 des Ausführungsbeispiels ist die Strukturierung 106 auch auf dem Kabelführungsröhrchen 104, durch das der Kabelabschnitt 2 eintritt, vorhanden, aber nicht zwingend erforderlich. Dieser Teil des Kabelzugabfangelements 101 kann dabei im Wesentlichen der Führung und Stabilisierung des Kabelabschnitts 2 dienen. Das Aufschieben einer Tülle 108, die mit der Strukturierung 106 des Kabelführungsröhrchens 104 korrespondiert, kann eine solche Führung und Stabilisierung des Kabelabschnitts 2 eingangsseitig weiter verbessern.

In Figur 7 ist eine räumliche Darstellung in Innenansicht einer geöffneten Glasfaseranschlussdose 1 gezeigt. Die Glasfaseranschlussdose 1 weist ein Gehäuse 1.1 zur Aufnahme eines Kabelabschnitts 2 (siehe Figur 5) eines Glasfaserkabels auf. Dabei sind Ausnehmungen 3.1, 3.2 zur Kabelzuführung in das Innere des Gehäuses 1.1 vorgesehen. Die Glasfaseranschlussdose 1 kann weiter einen Anschlussbereich 4 für wenigstens einen separat ausgebildeten Steckverbinder (nicht dargestellt) aufweisen, sowie einen Kabelfixierungsbereich 5.

Der Kabelfixierungsbereich 5 weist in der dargestellten Ausführungsform ein Mittel zur Befestigung 5.1 des im Inneren des Gehäuses 1.1 aufgenommenen Kabelabschnitts 2 sowie Mittel zur Aufnahme und Befestigung 5.2 eines an dem Kabelabschnitt 2 angebrachten Kabelzugabfangelements 101 (siehe Figur 1) auf. Insbesondere sind die Mittel zur Befestigung 5.1 des im Inneren des Gehäuses 1.1 aufgenommenen Kabelabschnitts 2 geeignet, um eine Befestigung durch einen Kabelbinder zu ermöglichen. Weiter sind die Mittel zur Aufnahme und Befestigung 5.2 eines an dem Kabelabschnitt 2 angebrachten Kabelzugabfangelements 101 dazu ausgebildet, ein Kabelzugabfangelement 101 mit einem standardisierten Grundkörper für die Glasfasertechnik aufzunehmen und zu fixieren.

Im Anschlussbereich 4 ist vorgesehen, dass zwei separat ausgebildete Steckverbinder (nicht dargestellt) in die Glasfaseranschlussdose 1 einrastbar sind.

Die Figur 7 zeigt außerdem eine Kabelführungseinrichtung 6 zur Führung des im Inneren des Gehäuses 1.1 aufgenommenen Kabelabschnitts 2, vorzugsweise eines von seinem Kabelmantel 2.1 befreiten Glasfaserkabelabschnitts 2. Die Kabelführungseinrichtung 6 kann hierzu eine Anzahl von Anlageflächen 6.1 aufweisen, die zumindest annähernd kreisförmig zueinander angeordnet sind und einen aufgerollten Kabelabschnitt 2 derart umgreifen können, dass dieser im Gehäuse 1.1 gehalten wird.

Das Ausführungsbeispiel zeigt weiter einen Spleißhalteraufnahmebereich 7 zur Aufnahme eines separaten Spleißhalters (nicht dargestellt), wozu zwei Ausrichtpunkte 7.1 und ein Verschraubungspunkt 7.2 vorgesehen sind. Es kann selbstverständlich auch ein mit dem Gehäuse 1.1 der Glasfaseranschlussdose 1 einteilig ausgebildeter Spleißhalter vorgesehen sein.

Die im Ausführungsbeispiel gezeigte Glasfaseranschlussdose 1 weist ein Deckelteil 8 und ein Unterteil 9 auf, wobei das Deckelteil 8 scharnierartig an dem Unterteil 9 gelagert ist. Deckelteil 8 und Unterteil 9 weisen weiterhin Rastelemente 10 auf, um das Deckelteil 8 im geschlossenen Zustand mit dem Unterteil 9 lösbar zu verbinden. Das Deckelteil 8 zeigt weiter eine Blende 11, die geeignet ist, eine Ausnehmung 3.1 durch eine Seitenwand des Unterteils 9 zur Kabelzuführung zu verdecken, sofern diese nicht verwendet werden soll.

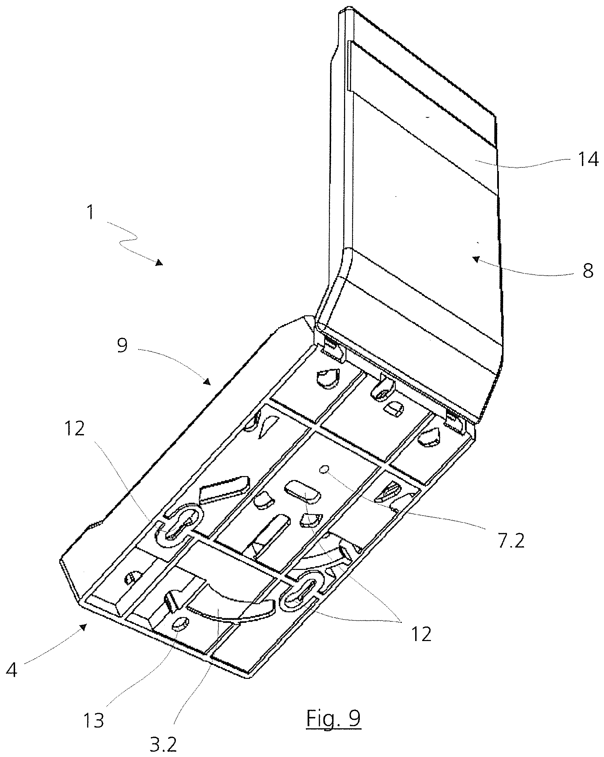

Zur Befestigung der Glasfaseranschlussdose 1 sind im Ausführungsbeispiel drei Langlöcher 12 vorgesehen. Es ist zusätzlich ein weiterer Montagepunkt in Form einer Bohrung 13 (siehe Figur 9) vorgesehen. Natürlich kann der Fachmann auch eine beliebig andere Ausgestaltung, Position und Anzahl von Langlöchern 12 und/oder Bohrungen 13 in der Glasfaseranschlussdose 1 vorsehen.

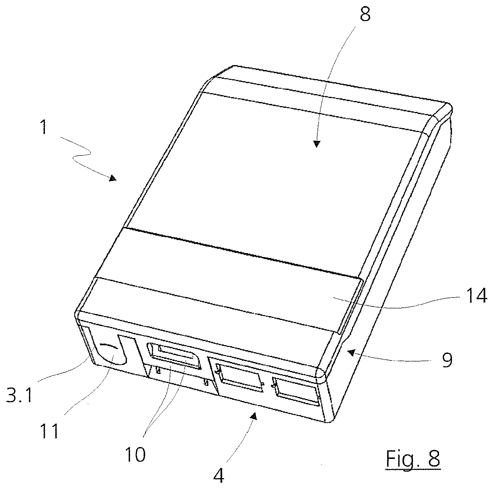

Figur 8 zeigt das Ausführungsbeispiel der Glasfaseranschlussdose 1 in einer geschlossenen Position des Deckelteils 8. Das Deckelteil 8 weist eine Vertiefung 14 zur Aufnahme einer Kennzeichnung und/oder einer Plombe und/oder eines Siegels (nicht dargestellt) auf. Die Vertiefung 14 erstreckt sich dabei über die komplette Breite des Deckelteils 8 und verläuft folglich von einer Seite des Deckteils 8 zu dessen anderen Seite. Es ist außerdem erkennbar, dass die Blende 11 des Deckelteils 8 die Ausnehmung 3.1 zur Kabelzuführung durch die vordere Seitenwand des Unterteils 9 verdeckt. Sollte die Kabelzuführung durch die vordere Seitenwand allerdings verwendet werden, kann die Blende 11 leicht aus dem Deckelteil 8 herausgebrochen werden.

In Figur 9 ist eine räumliche, rückseitige Ansicht der Glasfaseranschlussdose 1 in geöffnetem Zustand des Deckelteils 8 gezeigt. Insbesondere erkennbar sind die Langlöcher 12 zur Montage der Glasfaseranschlussdose 1 und die zusätzliche Bohrung 13 zur Montage der Glasfaseranschlussdose 1. Auch der Verschraubungspunkt 7.2 zur Fixierung eines separat ausgebildeten Spleißhalters sowie die Ausnehmung 3.2 zur Kabelzuführung durch die Rückenplatte des Unterteils 9 sind in der Figur 9 erkennbar. Weitere Durchbrüche durch die Rückenwand des Unterteils 9 sind bei der vorliegenden Ausführungsform fertigungsbedingt.

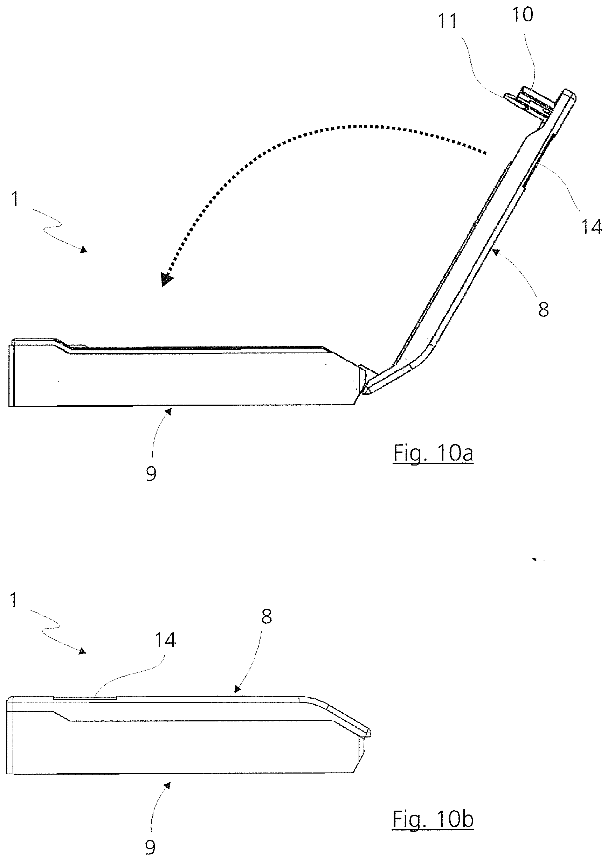

Die Figuren 10a und 10b zeigen jeweils eine Seitenansicht der Glasfaseranschlussdose 1 des Ausführungsbeispiels, wobei dargestellt ist, wie ein Deckelteil 8 durch eine scharnierförmige Lagerung geöffnet bzw. geschlossen werden kann.

## Patentansprüche

1. Kabelzugabfangelement (101) für Glasfaserkabel mit:
einem Grundkörper (102), der elastische Rastelemente (103) zur verrastenden Befestigung des Kabelzugabfangelements (101) in einer korrespondierende Aufnahme (5.2) aufweist, und
mit wenigstens einem zylinderförmigen Kabelführungsröhrchen (104),
wobei sich das Kabelführungsröhrchen (104) durch den Grundkörper (102) erstreckt und mit zumindest einem Ende (105) aus dem Grundkörper (102) herausragt und
**dadurch gekennzeichnet dass** das zumindest eine herausragende Ende (105) des Kabelführungsröhrchens (104) an dem Außenumfang seiner Mantelfläche eine Strukturierung (106) aufweist und
wobei der Grundkörper (102) flächensymmetrisch zu einer Mittelebene (107) ausgebildet ist, die orthogonal zur Längsachse des wenigstens einen Kabelführungsröhrchens (104) verläuft.

2. Kabelzugabfangelement (101) nach Anspruch 1, wobei der Grundkörper (102) mit den elastischen Rastelementen (103) und/oder mit dem wenigstens einen Kabelführungsröhrchen (104) einteilig ausgebildet ist.

3. Kabelzugabfangelement (101) nach Anspruch 1 oder 2, wobei der Grundkörper (102) durch seine gegebene äußere Form und die Anordnung und Anzahl seiner Rastelemente (103) mechanisch kompatibel zu einer standardisierten Aufnahme für einen LC-Steckverbinder oder SC-Steckverbinder oder E-2000-Steckverbinder für Glasfaserkabel ausgebildet ist.

4. Kabelzugabfangelement (101) nach einem der Ansprüche 1 bis 3, wobei die Strukturierung (106) an dem Außenmantel des zumindest einen herausragenden Endes (105) des Kabelführungsröhrchens (104) durch umlaufende zahnförmige Erhebungen, insbesondere zur Verbindung mit einer korrespondieren Tülle (108), gebildet ist.

5. Kabelzugabfangelement (101) nach einem der Ansprüche 1 bis 4, wobei ein Innendurchmesser (I) des Kabelführungsröhrchens (104) 1 mm bis 10 mm, besonders bevorzugt 3 mm bis 5 mm, beträgt.

6. Kabelzugabfangelement (101) nach einem der Ansprüche 1 bis 5, wobei das Kabelzugabfangelement (101) wenigstens zwei Kabelführungsröhrchen (104) aufweist, die im Wesentlichen parallel zueinander durch den Grundkörper (102) verlaufen.

7. Kabelzugabfangelement (101) nach einem der Ansprüche 1 bis 6 in Verbindung mit einer Tülle (108) zum Verklemmen von in einem Kabelmantel eines Kabelabschnitts (2) eines Glasfaserkabels enthaltenem Garn auf dem Außenumfang der Mantelfläche des Kabelführungsröhrchens (104).

8. Glasfaseranschlussdose (1) mit einem Kabelzugabfangelement (101) nach einem der Ansprüche 1 bis 7, wobei das Kabelzugabfangelement (101) in der Glasfaseranschlussdose (1) aufgenommen und als Zugentlastung für einen aufzunehmenden Kabelabschnitt (2) für Glasfaserkabel ausgelegt ist.

9. Glasfaseranschlussdose (1) nach Anspruch 8,
welche Glasfaseranschlussdose (1) ein Gehäuse (1.1) zur Aufnahme eines Glasfaserkabelabschnitts (2) aufweist mit:
wenigstens einer Ausnehmung (3.1, 3.2) zur Kabelzuführung in das Innere des Gehäuses (1.1),
einem Anschlussbereich (4) für wenigstens einen separat ausgebildeten Steckverbinder, sowie
einem Kabelfixierungsbereich (5), der Mittel zur Aufnahme und Befestigung (5.2) des Kabelzugabfangelements (101) für Glasfaserkabel nach einem der Ansprüche 1 bis 7, aufweist.

10. Glasfaseranschlussdose (1) nach Anspruch 8 oder 9, wobei das Gehäuse (1.1) der Glasfaseranschlussdose (1) ein Deckelteil (8) zum Öffnen und Schließen der Glasfaseranschlussdose (1) aufweist, und wobei das Deckelteil (8) eine Vertiefung (14) an einer in geschlossenem Zustand der Glasfaseranschlussdose (1) sichtbaren Außenfläche zur Aufnahme einer Kennzeichnung und/oder einer Plombe und/oder eines Siegels aufweist, wobei sich die Vertiefung (14) über die komplette Breite des Deckelteils (8) erstreckt.

## Claims

1. Cable tension-absorbing element (101) for glass-fiber cables, having:
a main body (102) which has elastic latching elements (103) for a latching fastening of the cable tension-absorbing element (101) in a corresponding receptacle (5.2), and
having at least one cylindrical cable guide tube (104),
wherein the cable guide tube (104) extends through the main body (102) and projects with at least one end (105) out of the main body (102), and **characterized in that**
the at least one projecting end (105) of the cable guide tube (104) has a structuring (106) on the outer circumference of its lateral surface, and
wherein the main body (102) is formed in a surface-symmetrical manner with respect to a central plane (107) which extends orthogonally with respect to the longitudinal axis of the at least one cable guide tube (104).

2. Cable tension-absorbing element (101) according to claim 1, wherein the main body (102) is formed in one piece with the elastic latching elements (103) and/or with the at least one cable guide tube (104).

3. Cable tension-absorbing element (101) according to claim 1 or 2, wherein the main body (102), due to its given outer shape and the arrangement and number of its latching elements (103), is formed in a mechanically compatible manner with respect to a standardized receptacle for an LC plug connector or SC plug connector or E-2000 plug connector for glass-fiber cables.

4. Cable tension-absorbing element (101) according to one of claims 1 to 3, wherein the structuring (106) on the outer surface of the at least one projecting end (105) of the cable guide tube (104) is formed by circumferential tooth-shaped elevations, in particular for connection to a corresponding grommet (108).

5. Cable tension-absorbing element (101) according to one of claims 1 to 4, wherein an inner diameter (I) of the cable guide tube (104) is 1 mm to 10 mm, particularly preferably 3 mm to 5 mm.

6. Cable tension-absorbing element (101) according to one of claims 1 to 5, wherein the cable tension-absorbing element (101) has at least two cable guide tubes (104) which run substantially parallel to one another through the main body (102).

7. Cable tension-absorbing element (101) according to one of claims 1 to 6 in connection with a grommet (108) for clamping yarn contained in a cable sheath of a cable section (2) of a glass-fiber cable on the outer circumference of the lateral surface of the cable guide tube (104).

8. Glass-fiber junction box (1) having a cable tension-absorbing element (101) according to one of claims 1 to 7, wherein the cable tension-absorbing element (101) is received in the glass-fiber junction box (1) and is designed as a strain relief for a cable section (2) to be received for glass-fiber cables.

9. Glass-fiber junction box (1) according to claim 8,
which glass-fiber junction box (1) has a housing (1.1) for receiving a glass-fiber cable section (2) having:
at least one recess (3.1, 3.2) for leading cables into the interior of the housing (1.1),
a connection region (4) for at least one separately formed plug connector, and
a cable fixing region (5) which has means for receiving and fastening (5.2) the cable tension-absorbing element (101) for glass-fiber cables according to one of claims 1 to 7.

10. Glass-fiber junction box (1) according to claim 8 or 9, wherein the housing (1.1) of the glass-fiber junction box (1) has a cover part (8) for opening and closing the glass-fiber junction box (1), and wherein the cover part (8) has a depression (14) on an outer surface, which is visible in the closed state of the glass-fiber junction box (1), for receiving an identification and/or a tamper evidence and/or a seal, wherein the depression (14) extends over the entire width of the cover part (8).

## Revendications

1. Élément d'interception de traction de câble (101) pour câble fibre optique, comprenant :
un corps de base (102) qui présente des éléments d'encliquetage élastiques (103) pour la fixation par encliquetage de l'élément d'interception de traction de câble (101) dans un logement correspondant (5.2), et
au moins un tube de guidage de câble cylindrique (104),
dans lequel le tube de guidage de câble (104) s'étend à travers le corps de base (102) et fait saillie avec au moins une extrémité (105) hors du corps de base (102), et **caractérisé en ce que**
l'au moins une extrémité saillante (105) du tube de guidage de câble (104) présente une structuration (106) sur la périphérie extérieure de sa surface d'enveloppe, et
dans lequel le corps de base (102) est réalisé avec une symétrie de surface par rapport à un plan médian (107) qui s'étend orthogonalement à l'axe longitudinal de l'au moins un tube de guidage de câble (104).

2. Élément d'interception de traction de câble (101) selon la revendication 1, dans lequel le corps de base (102) est réalisé d'une seule pièce avec les éléments d'encliquetage élastiques (103) et/ou avec l'au moins un tube de guidage de câble (104).

3. Élément d'interception de traction de câble (101) selon la revendication 1 ou 2, dans lequel le corps de base (102) est réalisé par sa forme extérieure donnée et l'agencement et le nombre de ses éléments d'encliquetage (103) de manière mécaniquement compatible avec un logement normalisé pour un connecteur enfichable LC ou un connecteur enfichable SC ou un connecteur enfichable E-2000 pour câble fibre optique.

4. Élément d'interception de traction de câble (101) selon l'une quelconque des revendications 1 à 3, dans lequel la structuration (106) sur la surface extérieure de l'au moins une extrémité saillante (105) du tube de guidage de câble (104) est formée par des rehaussements périphériques en forme de dents, en particulier pour la liaison avec une douille correspondante (108).

5. Élément d'interception de traction de câble (101) selon l'une quelconque des revendications 1 à 4, dans lequel un diamètre intérieur (I) du tube de guidage de câble (104) est de 1 mm à 10 mm, de manière particulièrement préférée de 3 mm à 5 mm.

6. Élément d'interception de traction de câble (101) selon l'une quelconque des revendications 1 à 5, dans lequel l'élément d'interception de traction de câble (101) présente au moins deux tubes de guidage de câble (104) qui s'étendent sensiblement parallèlement l'un à l'autre à travers le corps de base (102).

7. Élément d'interception de traction de câble (101) selon l'une quelconque des revendications 1 à 6, en liaison avec une douille (108) pour le serrage de fil contenu dans une gaine de câble d'une section de câble (2) d'un câble fibre optique sur la périphérie extérieure de la surface d'enveloppe du tube de guidage de câble (104).

8. Boîte de raccordement de fibre optique (1) comprenant un élément d'interception de traction de câble (101) selon l'une quelconque des revendications 1 à 7, dans laquelle l'élément d'interception de traction de câble (101) est reçu dans la boîte de raccordement de fibre optique (1) et est conçu comme une décharge de traction pour une section de câble (2) à recevoir pour câble fibre optique.

9. Boîte de raccordement de fibre optique (1) selon la revendication 8,
laquelle boîte de raccordement de fibre optique (1) présente un boîtier (1.1) pour le logement d'une section de câble fibre optique (2) avec :
au moins un évidement (3.1, 3.2) pour l'amenée de câble à l'intérieur du boîtier (1.1),
une zone de raccordement (4) pour au moins un connecteur enfichable réalisé séparément, ainsi
qu'une zone de fixation de câble (5) qui présente des moyens pour le logement et la fixation (5.2) de l'élément d'interception de traction de câble (101) pour câble fibre optique selon l'une des revendications 1 à 7.

10. Boîte de raccordement de fibre optique (1) selon la revendication 8 ou 9, dans laquelle le boîtier (1.1) de la boîte de raccordement de fibre optique (1) présente une partie de couvercle (8) pour l'ouverture et la fermeture de la boîte de raccordement de fibre optique (1), et dans laquelle la partie de couvercle (8) présente une dépression (14) sur une surface extérieure visible dans l'état fermé de la boîte de raccordement de fibre optique (1) pour le logement d'un marquage et/ou d'un plomb et/ou d'un sceau, dans laquelle la dépression (14) s'étend sur toute la largeur de la partie de couvercle (8).
